# EUROPÄISCHE PATENTANMELDUNG

(11) **EP 1 798 245 A1**
(43) Veröffentlichungstag der Anmeldung: **20.06.2007**
(21) Anmeldenummer: 05112011.1
(22) Anmeldetag: 13.12.2005
(51) Int. Cl.: C08F 8/46

(54) **Modifizierung von acetalisierten, Vinylalkoholgruppen enthaltenden Polymeren mit Carbonsäureanhydriden und anschließende photochemische Vernetzung**

(71) Anmelder: Kuraray Europe GmbH, 65926 Frankfurt am Main (DE)
(72) Erfinder: Köhnen, Sven, 65527, Niedernhausen (DE); Dr. Frank, Michael, 55129, Mainz (DE); Fuss, Robert Dr., 65825 Liederbach (DE)
(74) Vertreter: Kisters, Michael Marcus

(57) **Zusammenfassung**

Die Erfindung betrifft modifizierte, Vinylalkohol-Gruppen enthaltende Polymere, erhältlich durch Umsetzung eines Teils der Vinylalkohol-Gruppen mit mindestens einem olefinisch ungesättigten Carbonsäureanhydrid und anschließende photochemische Vernetzung.

## Beschreibung

Die Erfindung betrifft die Modifizierung von acetalisierten, Vinylalkohol-Gruppen enthaltende Polymere durch Umsetzung mit mindestens einem Carbonsäureanhydrid in der Polymer-Schmelze und anschließende photochemische Vernetzung.

### Technisches Gebiet

Acetalisierte Vinyl-Alkoholgruppen enthaltende Polymere wie Polyvinylbutyrale oder acetalisierte Ethylen/Polyvinylalkohol-Copolymere weisen je nach Acetalisierungsgrad oder Restpolyvinylalkohol-Gehalt bestimmte Eigenschaften wie z.B. Wasserlöslichkeit oder Beständigkeit gegen mechanische Beanspruchung auf. Da die freien Vinylalkohol-Gruppen dieser Polymeren noch chemisch reaktiv sind, wurden vielfältige Versuche unternommen, durch polymeranaloge Umsetzung an den Alkoholfunktionen die Eigenschaft des zugrunde liegenden Polymeren zu verändern.

So beschreibt WO 99/23118 die Herstellung von bioabbaubaren Polyhydroxypolymeren durch Umsetzung von Polyvinylalkohol mit Lactonen in einem Extruder.

WO 01/79305 offenbart die Herstellung von hochmolekularen, vernetzten Polyvinylbutyralen durch Umsetzung von Polyvinylbutyral mit mindestens einem Di- und/oder Polycarbonsäurederivat als Vernetzungsreagenz. Bevorzugtes Vernetzungsreagenz ist Diethyl- und/oder Dimethyloxalat bzw. die entsprechenden Dicarbonsäuren. Die Verwendung von Carbonsäureanhydriden ist in dieser Publikation nicht erwähnt.

Die Umsetzung von nicht acetalisiertem Polyvinylalkohol bzw. Vinylalkohol-Copolymeren mit Carbonsäureanhydriden ist in US 3,548,408 offenbart. Die hier beschriebenen Polyvinylalkohole sind zu mehr als 90 % verseift, d.h. sie weisen eine große Anzahl von Hydroxyfunktionen auf. Somit können durch die Reaktion mit einem Carbonsäureanhydrid relativ leicht hohe Umsätze bzw. Veresterungsreaktionen erreicht werden.

Acetalisierte Polyvinylalkohole, d.h. Verbindungen mit einer erheblich geringeren Anzahl von freien Hydroxyfunktionen sind in dieser Publikation nicht erwähnt. Weiterhin wird die photochemische Vernetzung der Polymere nicht beschrieben.

In dem US-Patent 6326125 wird als Intermediat zur Herstellung einer photosensitiven Verbindung die Umsetzung von acetalisiertem Polyvinylalkohol mit einem Carbonsäureanhydrid beschrieben. Dieses Intermediat selber ist aber nicht photosensitiv, sondern wird in einer weiteren Reaktion durch Umsetzung mit einem mindestens eine Doppelbindung enthaltenem Epoxid zur Reaktion gebracht.

Als Beschichtungsmaterial sind Polyvinylacetale bzw. Derivate häufig nicht geeignet, da sie nicht ausreichend lösungsmittelbeständig sind und nur eine geringe mechanische Stabilität aufweisen.

Aufgabe der vorliegenden Erfindung war es daher, diese Polymere für solche Anwendungen entsprechend zu modifizieren.

Überraschenderweise wurde gefunden, dass acetalisierte Polyvinylalkohole oder deren Derivate sich in einfacher Weise mit Carbonsäureanhydriden umsetzen und anschließend auch photochemisch vernetzen lassen.

Gegenstand der vorliegenden Erfindung sind daher modifizierte, Vinylalkohol-Gruppen enthaltende Polymere, erhältlich durch Umsetzung zumindest eines Teils der Vinylalkohol-Gruppen mit mindestens einem olefinisch ungesättigten, bevorzugt cyclischem Carbonsäureanhydrid und anschließende photochemische Vernetzung.

Bevorzugt werden als Vinylalkohol-Gruppen enthaltendes Polymer solche aus der Gruppe, der ganz oder teilweise verseiften Polyvinylacetate, ganz oder teilweise verseiften Ethylen/Vinylacetat-Copolymere, ganz oder teilweise acetalisierten Polyvinylalkohole, Polyvinylbutyrale und/oder ganz oder teilweise acetalisierten Ethylen/Vinylacetat/Vinylalkohol-Copolymere ausgewählt.

Polyvinylacetale können nach ganz oder teilweiser Verseifung zum Polyvinylalkohol in einer dem Fachmann bekannten Weise mit mindestens einem Aldehyd zum entsprechenden Acetal (Polyvinylacetal) umgesetzt werden. Diese Verbindungen enthalten noch Hydroxyfunktionen d.h. gelten als Vinylalkohol-Gruppen enthaltene Polymere. Zur Acetalisierung werden bevorzugt aliphatische Aldehyde mit 2 bis 10 Kohlenstoffatomen, insbesondere Butyraldehyd eingesetzt.

Die Vinylalkoholgruppen enthaltenden Polymere werden erfindungsgemäß mit mindestens einem olefinisch ungesättigten Carbonsäureanhydrid umgesetzt, wobei zumindest ein Teil der Vinylalkohol-Gruppen abreagiert. Bevorzugt enthalten die Polymere vor der Umsetzung mit den Carbonsäureanhydriden noch 10 - 85 Mol%, bevorzugt 15 - 41 Mol%, bzw. 22 - 35 Mol% an freien Vinylalkohol-Gruppen, wobei die übrigen Repetiereinheiten aus Vinylacetat-, Ethylen- und/oder Vinylacetal-Gruppen besteht.

Die erfindungsgemäßen modifizierten Polymere enthalten bevorzugt nach der Umsetzung mit den Carbonsäureanhydriden noch 0, 1-84, 9 Mol % insbesondere 0,1 - 50 Mol %, 0,1 - 40, 0,1 - 30 oder 0,1 - 20 Mol% Vinylalkohol-Gruppen. Der Anteil an Vinylalkohol-Gruppen wird wie in den Beispielen beschreiben, bestimmt.

Die Umsetzung der Vinylalkohol-Gruppen enthaltenden Polymere bzw. der acetalisierten Polyvinylalkohole mit den Carbonsäureanhydriden erfolgt wahrscheinlich durch Veresterung einer Vinylalkohol-Gruppe. Bei cyclischen Carbonsäureanhydriden bildet sich eine Carboxyfunktion in der neuen Seitenkette. Möglicherweise und in Abhängigkeit von den Reaktionsbedingungen treten auch noch Vernetzungsreaktionen mit der freien Carbonsäurefunktion der neuen Seitenkette und der gleichen oder einer anderen Polymerkette auf.

Dementsprechend ist es möglich, dass sich das Molekulargewicht der auf diese Weise modifizierten, acetalisierten Vinylalkohol-Gruppen enthaltenden Polymere durch die Umsetzung mit den Carbonsäureanhydriden um 5 bis 100 %, bevorzugt nur gering, von 10 bis 50 % erhöht. Durch Erhöhen der Reaktionstemperatur kann sich das Molekulargewicht durch die Umsetzung auch deutlich, z.B. um 50 bis 100 % erhöhen.

Zur Herstellung der erfindungsgemäßen Produkte können ein oder mehrere cyclische oder acyclische Carbonsäureanhydride wie z.B. Maleinsäureanhydrid, 1,2,3,6-Tetrahydrophthalsäureanhydrid oder 3,4,5,6-Tetrahydrophthalsäureanhydrid eingesetzt werden.

Die Umsetzung der Polymere mit Cabonsäureanhydriden erfolgt bevorzugt in der (Polymer)Schmelze. Die Anwesenheit von geringen Mengen von Additiven wie z.B. UV-Stabilisatoren, Antioxidantien oder Säurekatalysatoren mit einer Gesamtmenge zwischen 1 und 25, bevorzugt 5 bis 15 Gew. % bezogen auf die Menge des Polymeren, stören nicht.

Es ist zudem möglich, die Umsetzung in Gegenwart von 1 bis 100 Gew. % (bezogen auf das Polymere) Weichmachern durchzuführen.

Eine Aufstellung von handelsüblichen Weichmachern, die Angaben über deren Verträglichkeit mit Polyvinylacetalen, insbesondere Polyvinylbutyral, enthält, kann beispielsweise der Druckschrift Modern Plastics Encyclopedia 1981/1982, S. 710 bis 719 entnommen werden. Bevorzugte Weichmacher sind Diester von aliphatischen Diolen, insbesondere von aliphatischen Polyätherdiolen bzw. Polyätherpolyolen, mit aliphatischen Carbonsäuren, vorzugsweise Diester von Polyalkylenoxiden, insbesondere Diester des Di-, Tri- und Tetraethylenglykols mit aliphatischen (C6-C10)-Carbonsäuren, vorzugsweise 2-Ethylbuttersäure und n-Heptansäure, ferner Diester von aliphatischen oder aromatischen (C2-C18)-Dicarbonsäuren, vorzugsweise Adipin-, Sebazin- und Phthalsäure, mit aliphatischen (C4-C12)-Alkoholen, vorzugsweise Dihexyladipat, Phthalate, Trimellitate, Phosphate, Fettsäureester, insbesondere Triethylenglykol-bis-(2-ethylbutyrat), Triethylenglycolethylhexanoat (3G8), aromatische Carbonsäureester, insbesondere Dibenzoate, und/oder Hydroxycarbonsäureester.

Die Umsetzung selber wird zweckmäßigerweise in einem entsprechend beheizbaren Kneter, Rührkessel oder Extruder durchgeführt.

Die Vernetzung des Umsetzungsproduktes aus Vinylalkohol-Gruppen enthaltendem, acetalisiertem Polymer und dem Carbonsäureanhydrid erfolgt anschließend wahrscheinlich durch Photodimerisierung unter Bildung von Cyclobutanderviaten. Diese Art der photoinduzierten Vernetzung ist bekannt (siehe z.B. A. Schönberg, "Preparative Organic Photochemistry", 2. compl. rev. ed. 1968, siehe Schema A).

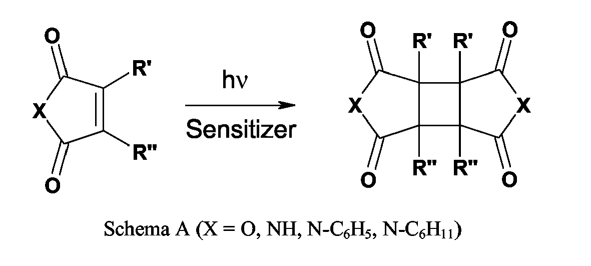

Die Vernetzung kann mit UV-Strahlung mit einer Wellenlänge von 100 bis 400 nm, d.h. UV-Strahlung des Typs A, B, und/oder C durchgeführt werden. Bestrahlungszeiten von einigen Sekunden bis max. 5 min. haben sich in der Praxis bewährt.

Optional wird die Bestrahlung unter Anwesenheit eines Photosensitizers (Tripletsensitzer) wie z.B. Benzophenon, Acetophenon, Phenanthren, Anthracen, aber auch Ketocoumarine) durchgeführt.

Das Molekulargewicht der so erhaltenen vernetzten Polymere kann sich um mehr als 200 % gegenüber dem Umsetzungsprodukt mit Carbonsäureanhydrid erhöhen. In der Regel ist eine Bestimmung des Molekulargewichts nicht mehr möglich, da die so erhaltenen Produkte in allen üblichen Lösungsmitteln unlöslich sind.

Die photochemische Vernetzung kann in der Schmelze oder aber am Feststoff durchgeführt werden, wobei letzteres bevorzugt ist.

Besonders bevorzugt wird das erfindungsgemäße Polymer als Beschichtung verwendet, indem das Umsetzungsprodukt der Vinylalkohol-Gruppen-haltigen Polymere mit den Carbonsäureanhydriden hergestellt, auf einen Gegenstand aufgetragen, optional getrocknet und anschließend, bevorzugt im Feststoff, photochemisch vernetzt. Die Auftragung des Umsetzungsprodukts auf den Gegenstand ist in Schmelze, Dispersion oder Lösung möglich. Als Lösemittel eignen sich zunächst unabhängig vom zu beschichtenden Substrat alle organischen Lösemittel, in denen das Umsetzungsprodukt löslich ist wie z.B. Alkohole, Ketone, Ester (z.B. Methylethylenketon oder Aceton) .

Ein weiterer Gegenstand der vorliegenden Erfindung ist daher ein Verfahren zur Modifizierung von Vinylalkohol-Gruppen enthaltenden Polymere durch Umsetzung eines Teils der Vinylalkohol-Gruppen mit mindestens einem olefinisch ungesättigten Carbonsäureanhydrid bevorzugt in der Schmelze, auftragen des Umsetzungsprodukts auf einen Gegenstand und anschließende photochemische Vernetzung.

Die erfindungsgemäßen Polymere sind besonders als Klebstoff und/oder Beschichtung von Kunststoffen oder Metallen (Gegenständen wie Flaschen, Tischoberflächen, Fußbodenbelägen usw.), verwendbar.

Insbesondere sind die erfindungsgemäßen Polymere zur Herstellung von wasserfesten Beschichtungen auf Papier, PET, Flaschen oder sonstigen PET-Oberflächen, Polymerfolien, Farben oder Lacke oder zur Verbesserung der Oberflächenhärte bzw. als kratzfeste Beschichtungen verwendbar.

In der vorliegenden Erfindung kann zumindest ein Teil der Polyvinylacetal enthaltenden Zusammensetzung, vorzugsweise mindestens 70 Gew. %, besonders bevorzugt mindestens 90 Gew. % und ganz besonders bevorzugt 100 Gew.%, bezogen auf das Gesamtgewicht der in den Extruder überführten Zusammensetzung, über mindestens eine Hauptdosierung in einen Extruder überführt werden. Der Haupteinzug befindet sich üblich bei einem L/D-Verhältnis von bis zu 5. Das L/D-Verhältnis ist in der Fachwelt bekannt. Hierbei steht L für die Länge der Schnecke und D für den Durchmesser einer Schnecke. Extruder mit ähnlichen L/D-Verhältnissen weisen im Allgemeinen ähnliche Extrusionseigenschaften auf. Daher ist die Angabe des L/D-Verhältnisses üblich, wobei im Allgemeinen zusätzlich der Durchmesser D der Schnecke angegeben werden. Die Längenangabe "bei einem L/D-Verhältnis von bis zu 5" ergibt sich somit aus der Multiplikation des angegebenen L/D-Verhältnisses von 5 mit dem ebenfalls bekannten Schneckendurchmesser D. Bei einem Schneckendurchmesser von 30 mm bedeutet die Angabe "bei einem L/D-Verhältnis von bis zu 5", dass der Haupteinzug in einem Bereich von 0 mm bis zu einer Länge von 150 mm, bezogen auf den Anfangspunkt der Schnecke, liegt. Beträgt der Durchmesser der 10 mm, liegt der Haupteinzug innerhalb eines Bereiches von 0 bis 50 mm. Da der Haupteinzug eine Ausdehnung über Länge hat, ist festzuhalten, dass sich diese Angaben auf den Punkt des Haupteinzugs beziehen, der dem Anfangspunkt am nächsten ist.

Die Seitenstromzuführung ist in der Fachwelt bekannt, wobei üblich Additive über diesen Zugang in den Extruder einer Schmelze beigemischt werden. Die Zufuhr des Anhydrides kann unter anderem über eine an den Extruder angeschlossene Seitenstromdosierung, die mindestens eine Förderschnecke aufweisen kann, erfolgen. Hierbei kann die Seitenstromdosierung beispielsweise ein oder zwei Förderschnecken aufweisen.

Vorzugsweise wird die Seitenstromdosierung gekühlt, sodass innerhalb dieser Einrichtung keine Schmelze entsteht, sondern die Polyvinylacetal enthaltende Zusammensetzung beispielsweise als Pulver in den Hauptextruder gegeben wird. Vorzugsweise ist die Temperatur in der Seitenstromdosierung kleiner als der Schmelzbereich des Anhydrides. Vorzugsweise ist die Temperatur in der Seitenstromdosierung kleiner oder gleich 100°C, insbesondere kleiner oder gleich 80°C und besonders bevorzugt kleiner oder gleich 50°C.

Gemäß einem besonderen Aspekt ist der Schnecken-Durchmesser der Seitenstromdosierung kleiner als der Schnecken-Durchmesser des Extruders, wobei das Verhältnis von Schnecken-Durchmesser des Extruders zum Schnecken-Durchmesser der Seitenstromdosierung vorzugsweise im Bereich von 1,1:1 bis 10:1, besonders bevorzugt 2:1 bis 5:1 liegt.

Gemäß einem zweiten Aspekt der vorliegenden Erfindung kann man den Bereich des Extruders vom Haupteinzug bis zu einer Länge von mindestens 15* L/D, bevorzugt bis zu einer Länge von mindestens 20*L/D kühlen, um die zuvor dargelegten Aufgaben zu lösen. Hierbei kann die Kühlung über die Kühlung des Mantels erfolgen.

Die Bedeutung des L/D-Verhältnisses wurde zuvor dargelegt. Bei einem Schneckendurchmesser von 30 mm bedeutet die Angabe "bis zu einer Länge von mindestens 15* L/D", dass der Bereich des Extruders vom Haupteinzug bis zu einer Länge von mindestens 450 mm gekühlt wird. Beträgt der Durchmesser der 10 mm, wird der Bereich vom Haupteinzug bis zu einer Länge von mindestens 150 mm gekühlt. Da der Haupteinzug eine Ausdehnung über Länge hat, ist festzuhalten, dass sich diese Angaben auf den Punkt des Haupteinzugs beziehen, der dem Anfangspunkt am nächsten ist.

Gemäß einem dritten Aspekt der vorliegenden Erfindung kann man mindestens eine der Schnecken, vorzugsweise alle Schnecken des Extruders kühlen, um die zuvor dargelegten Aufgaben zu lösen. Vorzugsweise wird hierbei die Schnecke über Bereich des Extruders vom Haupteinzug bis zu einer Länge von mindestens 5* L/D, besonders bevorzugt mindestens 10* L/D gekühlt. Die Kühlung von Schnecken ist in der Fachwelt an sich bekannt.

Die Drehzahl des Extruders des Hauptstroms und, gegebenenfalls, der mindestens einen Seitenstromdosierung können vom Fachmann leicht bestimmt und angepasst werden. Die Drehzahl des Extruders des Hauptstroms liegt vorzugsweise im Bereich von 50 U/min bis 500 U/min, besonders bevorzugt im Bereich von 60 U/min bis 400 U/min.

Gemäß einem besonderen Aspekt der vorliegenden Erfindung kann hierbei die Temperatur beim Überführen in den schmelzflüssigen Zustand geändert werden, wobei vorzugsweise eine Temperaturerhöhung durchgeführt werden kann, um beispielsweise flüchtige Bestandteile aus der Mischung zu entfernen. Hierbei kann beispielsweise die Temperatur stufenförmig erhöht werden, um ein schonendes und energiesparendes Entfernen dieser Stoffe zu erzielen. Vorzugsweise ist die Temperatur beispielsweise bei der Zuführung in den Extruder kleiner oder gleich der Glasübergangstemperatur des Vinylalkohol-Gruppen haltigen Polymers. Gemäß einem besonderen Aspekt kann die Temperatur im Bereich von 40 °C bis 120 °C, vorzugsweise 80 °C bis 120 °C liegen. Diese Temperatur kann anschließend im Hauptextruder auf einen Bereich von 100 °C bis 220 °C, vorzugsweise 130 °C bis 220°C erhöht werden, wobei diese Temperaturerhöhung über mehrere Stufen erfolgen kann. Flüchtige Stoffe sowie nicht umgesetzte Reaktionspartner können auf bekannte Weise beispielsweise Entgasen aus der Zusammensetzung entfernt werden. Des Weiteren werden bei bevorzugten Varianten des Verfahrens einige Zonen des Extruders nicht benötigt, wobei diese ausgebaut werden können. Hierdurch ergeben sich weitere Betriebsvorteile.

Das Verfahren der "Extrusion" bezeichnet ein auch als "Strangpressen" bezeichnetes Verfahren zur Herstellung von Rohren, Drähten, Profilen, Schläuchen usw. aus thermoplastischen Kunststoffen, wie Polyvinylacetal. Dabei erfolgt die Extrusion in Extrudern, die meist als Schnecken-, seltener als Kolbenextruder ausgelegt sind. Sie werden durch Einfülltrichter mit dem Thermoplasten sowie gegebenenfalls weiteren Zusatzstoffen beschickt, dann wird das Material erwärmt, homogenisiert und durch die formgebende Düse gepresst. Extruder existieren in verschiedenen Varianten, so unterscheidet man beispielsweise je nach der Zahl der Förderschnecken Ein- und Mehrschneckenextruder. Zu den im Rahmen der vorliegenden Erfindung besonders bevorzugten Extrudern gehören Ein- oder Zweischneckenextruder, Mehrwellenkneter, Kneter, Walzwerke und Kalander.

Für weitere Details zu den vorstehend genannten Fachbegriffen wird auf die gängige Fachliteratur, insbesondere auf Römpp's Chemielexikon, 5. Auflage und auf Saechtling, Kunststofftaschenbuch, 27. Ausgabe sowie die dort angegebenen Literaturstellen verwiesen.

Es ist möglich, die Extrusion unter Granulieren des Produkts durchzuführen. Dabei kann die Granulierung auf an sich bekannte Weise, vorzugsweise durch Heißabschlag (insbesondere durch exzentrische Granulierung, Messerwalzen-Granulierung, Wasserring-Granulierung oder Unterwasser-Granulierung) oder Kaltabschlag (insbesondere durch Stranggranulierung oder Bandgranulierung) erfolgen. Diese Verfahren sind aus dem Stand der Technik hinlänglich bekannt.

Beim Heißabschlag, gelegentlich auch als Kopfgranulierung bezeichnet, wird eine Polymerschmelze in Lochplatten zu Strängen geformt, die unmittelbar beim Austritt aus der Lochplatte auf die gewünschte Kornlänge geschnitten und abgekühlt werden. Dabei wird üblicherweise in Luft, einer Luft-Wasser-Verwirbelung oder unter Wasser gearbeitet. Bei einem wenig zum Kleben neigenden Kunststoff kann die Abkühlung auch in der Luft erfolgen, ansonsten wird hierzu üblicherweise Wasser verwendet. Üblicherweise wird danach eine Trocknung angeschlossen, obwohl diese erfindungsgemäß nicht unbedingt erforderlich ist, da das Polymer in der Regel nicht auffeuchtet.

Beim Kaltgranulieren werden Stränge oder Bänder extrudiert, in einem Wasserbad abgekühlt und in Strang- oder Bandgranulatoren zu Granulaten geschnitten. Beim Bandgranulieren müssen die Bänder zusätzlich zum Querschnitt auch in Längsrichtung geschnitten werden.

### Bestimmung des Vinylgruppen-Anteils

a) Bestimmung des Acetatgruppen-Anteils (PV-Acetatgehalt) Unter PV-Acetatgehalt wird der prozentige Anteil an Acetylgruppen verstanden, der sich aus dem Verbrauch der für die Verseifung von 1 g Substanz notwendigen Menge Kalilauge ergibt.
   Bestimmungsmethode (in Anlehnung an EN ISO 3681):
   Etwa 2 g der zu untersuchenden Substanz werden in einem 500 ml Rundkolben auf 1 mg genau eingewogen und mit 90 ml Ethanol und 10 ml Benzylalkohol am Rückfluß gelöst. Nach dem Abkühlen wird die Lösung mit 0,01 n NaOH gegen Phenolphthalein neutral gestellt. Anschließend werden 25,0 ml 0,1 n KOH zugegeben und 1,5 Stunden am Rückfluß erhitzt. Man läßt den Kolben verschlossen abkühlen und titriert den Laugenüberschuß mit 0,1 n Salzsäure gegen Phenolphthalein als Indikator bis zur bleibenden Entfärbung zurück. In gleicher Weise wird eine Blindprobe behandelt. Der PV-Acetatgehalt berechnet sich wie folgt: PV-Acetatgehalt [%] = (b-a)*86/E, mit a = Verbrauch an 0,1 n KOH für Probe in ml, b = Verbrauch an 0,1 n KOH für Blindversuch in ml und E = Einwaage der zu untersuchenden Substanz trocken in g.
b) Bestimmung des Vinylalkoholgruppen-Anteils (Polyvinylalkoholgehalt) beim unmodifizierten Polyvinylacetal Der Polyvinylalkoholgehalt ist der Anteil an Hydroxylgruppen, der durch die nachträgliche Acetylierung mit Essigsäureanhydrid nachweisbar ist.
   Bestimmungsmethode (in Anlehnung an DIN 53240)
   Etwa 1 g Mowital wird in einem 300 ml Schliff-Erlenmeyerkolben auf 1 mg genau eingewogen, 10,0 ml Essigsäureanhydrid-Pyridin-Gemisch (23:77 V/V) zugefügt und 15-20 Stunden auf 50°C erwärmt. Nach dem Abkühlen kommen 17 ml Dichlorethan hinzu und es wird kurzzeitig umgeschwenkt. Anschließend gibt man unter Rühren 8 ml Wasser zu, verschließt den Kolben mit einem Stopfen und rührt 10 Minuten. Kolbenhals und Stopfen werden mit 50 ml E-Wasser abgespült, mit 5 ml n-Butanol überschichtet und die freie Essigsäure mit 1 n Natronlauge gegen Phenolphtalein titriert. In gleicher Weise wird eine Blindprobe behandelt. Der Polyvinylalkoholgehalt berechnet sich wie folgt: Polyvinylalkoholgehalt [%] = (b-a)*440/E, mit a = Verbrauch an 1 n NaOH für Probe in ml, b = Verbrauch an 1 n NaOH für Blindprobe in ml, und E = Einwaage der zu untersuchenden Substanz trocken in g.

Zu Bestimmung des Vinylalkoholgruppen-Anteils des mit dem olefinisch ungesättigten Anhydrid umgesetzten Polyvinylacetals wird der Acetatgruppen-Anteil mit der Methode a) vor und nach der Umsetzung ermittelt. Durch die Umsetzung erhöht sich der Acetatgruppen-Anteil um die Anzahl der mit dem Anhydrid abreagierten Hydroxygruppen. Die ursprünglich vorhandene Anzahl der Hydroxygruppen wird am Ursprungsmaterial gemäß Methode b) ermittelt. Die Differenz dieser Werte entspricht dem Anteil der Vinylalkoholgruppen im dem mit dem olefinisch ungesättigten Anhydrid umgesetzten Polyvinylacetal.

### Beispiele

### Umsetzung mit dem olefinisch ungesättigten Anhydrid

In einem Doppelschneckenextruder der Fa. Leistritz mit einem Schneckendurchmesser von 30 mm und einem L/D Verhältnis von 44 wurde Mowital BG 30 H (Vinylgruppenanteil 27,7 Mol%) der Fa. Kuraray Specialities Europe GmbH mit einer Geschwindigkeit von 15 kg/h extrudiert. Hierbei wurde das Granulat über den Haupteinzug in den Extruder gegeben, wobei die Temperatur im Einzugsbereich 50 °C, in der Schmelzzone 180 °C und in der Düse 170°C betrug. 10 % (bezogen auf die Mischung) Maleinsäureanhydrid wurden mittels einer zweiten gravimetrischen Feststoffdosierung ebenfalls in den Haupteinzug dosiert. Der erhaltene Strang wurde granuliert, wobei ein Granulat mit einer Schüttdichte von 650 g/l erhalten wurde. Bei diesem Versuch wurde eine Schneckenkonfiguration mit hoher Mischwirkung und geringer Scherwirkung gewählt. Die Anordnung der verschiedenen Misch- und Förderelemente zur Einstellung der Misch- und Scherwirkung ist dem Fachmann bekannt. Der Vinylgruppenanteil des so erhaltenen Polymeren liegt bei 22,3 Mol%.

### Vernetzungsreaktion

### a) Herstellen der Lösung:

10 g des modifizierten BG 30 H aus o.g. Umsetzung werden zu 90 g Ethanol gegeben und unter Rühren gelöst. Anschließend fügt man 0,4 g Benzophenon als Photosenitiser hinzu und rührt erneut bis eine klare Lösung resultiert.

### b) Beschichten/Vernetzen:

Die Lösung wird anschließend auf eine PET-Trägerfolie mit einer Nassfilmschicht-Stärke von 200 µm aufgebracht. Die Applikation Lösung kann durch Standardbeschichtungsverfahren erfolgen wie z.B. Rakeln, Sprühbeschichten, Fluten, Tauchen, Drucken etc. erfolgen. Nach Trocknen der Beschichtung (bei 40°C) erfolgt die Härtung in einem UV-Ofen (UV-A cube, Fa. Hönle) mit einer Quecksilbermitteldrucklampe (Nennleistung 100 W/cm) für 120 Sekunden.

Das Molekulargewicht der erhaltenen Produkte wurde anschließend mittels Gelpermeationschromatografie bestimmt. Das Molekulargewicht des ursprünglichen Polymeren (Mowital BG 30 H) betrug, Mw=34200, die des mit Maleinsäureanhydrid umgesetzten Produkts Mw=37900. Das mit UV-Strahlung vernetzte System war in allen gängigen Lösungsmitteln unlöslich, sodass kein Molekulargewicht bestimmt werden konnte.

### c) Ausprüfen:

Die UV-vernetzte Beschichtung wird hinsichtlich ihrer Beständigkeit mittels Solvent-Rub-Test gegen Lösemittel und Abriebfestigkeit mit dem Taber-Abraber Test überprüft. Als Vergleichsbeispiel dient für beide Ausprüfungen das nicht UVbelichtete Material.

### C1a) Solvent-Rub-Test:

Ein Wattestäbchen oder eine Wattekugel wird mit Aceton (oder einem anderen Lösemittel) getränkt und über die Oberfläche der Beschichtung hin- und hergerieben. Es wird dabei die Anzahl der "rubs" bestimmt, bis die Beschichtung durchgerieben ist. Je größer die Anzahl an "rubs", je besser ist die Beständigkeit gegenüber dem verwendeten Lösemittel. Die folgende Tabelle 1 zeigt die Ergebnisse:

**Tabelle 1**

| | Bsp. 1 - nicht UV-belichtet | Bsp. 2 - UV-belichtet/vernetzt |
|---|---|---|
| Anzahl "rubs" - MEK | < 5 | > 25 |
| Anzahl "rubs" - Ethanol | < 5 | > 40 |

### C2) Taber-Abraser Test:

In Anlehnung an die DIN 52347 bzw. ASTM D1044 wird mit einem Gleit-Roll Verschleißverfahren die Probe untersucht. Dabei werden zwei Reibrollen auf die Oberfläche der Probe gepresst. Die Probe rotiert und versetzt die Reibrollen in eine schlupfbehaftete Relativbewegung. Zwischen Reibrollen und Probe bildet sich eine annähernd lineare Kontaktzone. Die Anpresskraft kann durch unterschiedliche Gewichte von 2,5 bis 10 N variiert werden. Der Abrieb wird als Masseverlust bei gegebener Zahl an Rotationen angegeben.

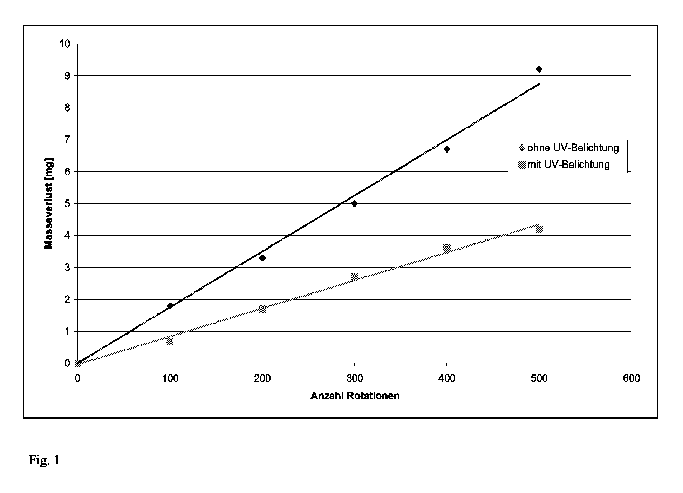

Für die Prüfungen wurde die jeweilige Beschichtung in 3 separaten Beschichtungsschritten auf eine Aluminiumprüfplatte aufgebracht, getrocknet und UV-belichtet (120 Sek., Hg-Mitteldruck, 100 W/cm). Die zu prüfende Beschichtung hatte eine Schichtstärke von ca. 40 µm. Als Prüfgerät wurde der Taber Abraser 5130 (Fa. Taber Industries) und die Reibrollen "Calibrase CS17" verwendet. Die Absaugleistung wurde mit 70% eingestellt, die Gewichtsbelastung (Anpresskraft) mit 500g. Die folgende Tabelle 2 bzw. Fig. 1 zeigen die Ergebnisse:

**Tabelle 2.**

| Anzahl Rotationen | Bsp. 1 - nicht UV-belichtet Masseverlust [mg] | Bsp. 2 - UV-belichtet/vernetzt Masseverlust [mg] |
|---|---|---|
| 100 | 1,5 | 0,7 |
| 200 | 2,7 | 1,7 |
| 300 | 4,4 | 2,9 |
| 400 | 6,7 | 3,6 |
| 500 | 9,2 | 4,2 |

Es zeigt sich, dass erfindungsgemäß hergestellte Polymere erheblich verbesserte Lösungsmittelbeständigkeiten und Abrasionsfestigkeit aufweisen.

## Patentansprüche

1. Modifizierte, Vinylalkohol-Gruppen enthaltende Polymere, erhältlich durch Umsetzung zumindest eines Teils der Vinylalkohol-Gruppen mit mindestens einem olefinisch ungesättigten Carbonsäureanhydrid und anschließende photochemische Vernetzung.

2. Modifizierte, Vinylalkohol-Gruppen enthaltende Polymere nach Anspruch 1, **dadurch gekennzeichnet, dass** Vinylgruppen-haltige Polymere, ausgewählt aus der Gruppe der ganz oder teilweise verseiften Polyvinylacetate, ganz oder teilweise verseiften Ethylen/Vinylacetat-Copolymere, ganz oder teilweise acetalisierten Polyvinylalkohole und/oder ganz oder teilweise acetalisierten Ethylen/Vinylacetat/Vinylalkohol-Copolymere eingesetzt werden.

3. Modifizierte, Vinylalkohol-Gruppen enthaltende Polymere nach Anspruch 1 oder 2, **dadurch gekennzeichnet, dass** zur photchemischen Vernetzung UV-Strahlung mit einer Wellenlänge von 100 bis 400 nm eingesetzt wird.

4. Modifizierte, Vinylalkohol-Gruppen enthaltende Polymere nach einem der Ansprüche 1 bis 3, **dadurch gekennzeichnet, dass** die photochemische Vernetzung in Anwesenheit eines Photosensitizers durchgeführt wird.

5. Modifizierte, Vinylalkohol-Gruppen enthaltende Polymere nach einem der Ansprüche 1 bis 4, **dadurch gekennzeichnet, dass** die Vinylalkohol-Gruppen enthaltenden Polymere vor der Umsetzung mit den Carbonsäureanhydriden 5-85 Mol% Vinylalkohol-Gruppen enthalten.

6. Modifizierte, Vinylalkohol-Gruppen enthaltende Polymere nach einem der Ansprüche 1 bis 5, **dadurch gekennzeichnet, dass** die Vinylalkohol-Gruppen enthaltenden Polymere nach der Umsetzung mit den Carbonsäureanhydriden 0,1-84,9 Mol % Vinylalkohol-Gruppen enthalten.

7. Modifizierte, Vinylalkohol-Gruppen enthaltende Polymere nach einem der Ansprüche 1 bis 6, **dadurch gekennzeichnet, dass** sich das Molekulargewicht der Vinylalkohol-Gruppen enthaltenden Polymere durch die Umsetzung mit den Carbonsäureanhydriden um 10 bis 100 % erhöht.

8. Modifizierte, Vinylalkohol-Gruppen enthaltende Polymere nach einem der Ansprüche 1 bis 7, **dadurch gekennzeichnet, dass** sich das Molekulargewicht der Vinylalkohol-Gruppen enthaltenden Polymere durch die Umsetzung mit den Carbonsäureanhydriden und anschließende Vernetzung um mehr als 200 % erhöht.

9. Modifizierte, Vinylalkohol-Gruppen enthaltende Polymere nach einem der Ansprüche 1 bis 8, **dadurch gekennzeichnet, dass** die photochemische Vernetzung im Feststoff durchgeführt wird.

10. Modifizierte, Vinylalkohol-Gruppen enthaltende Polymere nach einem der Ansprüche 1 bis 8, **dadurch gekennzeichnet, dass** die Umsetzung des Vinylalkohol-Gruppen enthaltenden Polymers mit dem Carbonsäureanhydrid in einem Extruder, Kneter oder Rührkessel durchgeführt wird.

11. Verwendung der modifizierten, Vinylalkohol-Gruppen enthaltende Polymere gemäß einem der Ansprüche 1 bis 10 als Klebstoff und/oder Beschichtung.

12. Verfahren zur Modifizierung von Vinylalkohol-Gruppen enthaltenden Polymere durch Umsetzung eines Teils der Vinylalkohol-Gruppen mit mindestens einem olefinisch ungesättigten Carbonsäureanhydrid, auftragen des Umsetzungsprodukts auf einen Gegenstand und anschließende photochemische Vernetzung.
